Europäisches Patentamt

(19) European Patent Office

Office européen des brevets

(11) Numéro de publication: **0 106 720**
**B1**

(12) **FASCICULE DE BREVET EUROPEEN**

(45) Date de publication du fascicule du brevet:
14.05.86

(21) Numéro de dépôt: **83401695.8**

(22) Date de dépôt: **23.08.83**

(51) Int. Cl.⁴: **G 01 F 19/00,** G 01 D 13/16

(54) **Graduation d'un récipient de mesure.**

(30) Priorité: **26.08.82 FR 8214662**

(43) Date de publication de la demande:
**25.04.84 Bulletin 84/17**

(45) Mention de la délivrance du brevet:
**14.05.86 Bulletin 86/20**

(84) Etats contractants désignés:
**BE DE IT LU NL**

(56) Documents cités:
**DE - B - 1 032 931**
**US - A - 1 490 210**
**US - A - 1 564 470**
**US - A - 1 585 844**
**US - A - 1 751 426**

(73) Titulaire: **LABORATOIRES BRUNEAU Société anonyme dite:, 204 avenue du Maréchal Juin, F-92100 Boulogne Billancourt (FR)**

(72) Inventeur: **Leclerc, Roland, 13 rue Croix La Contesse, F-28400 Nogent le Rotrou (FR)**

(74) Mandataire: **Combe, André et al, CABINET BEAU DE LOMENIE 55 rue d'Amsterdam, F-75008 Paris (FR)**

## Description

La présente invention concerne une graduation nouvelle disposée sur un récipient de mesure.

De nombreux récipients sont destinés à la mesure volumétrique d'un fluide; pour ce faire, ces récipients portent sur leur face latérale une graduation convenable.

Lorsque ces récipients sont de dimensions réduites, ou bien lorsque l'on veut atteindre dans la mesure du volume une précision élevée, il arrive que l'écart vertical entre deux traits successifs de cette graduation doive être faible et que, de ce fait, la lecture de la mesure du volume soit difficile. De plus, la difficulté de la lecture peut être encore accrue par la présence nécessaire, en face de chaque graduation, de l'indication chiffrée du volume qui correspond à ladite graduation. Si, pour éviter cette difficulté, on se contente de mentionner ladite indication chiffrée toutes les n graduations, alors il est nécessaire pour le lecteur d'intrapoler la mesure, ce qui conduit souvent à des erreurs.

Le document US-A-1 564 470 se réfère à un récipient de mesure comportant une graduation de lecture.

Les documents US-A-1 490 210 et US-A-1 751 426 se réfèrent à des instruments de mesure comportant des graduations de lecture.

La présente invention concerne un moyen nouveau permettant d'avoir une graduation d'une lisibilité améliorée, et pour laquelle chaque trait peut être affecté d'une indication chiffrée ayant une dimension suffisante pour lui assurer une bonne lisibilité.

Ledit moyen consiste en ce que ladite graduation est disposée sur au moins une ligne directrice qui par rapport à la génératrice du récipient de mesure fait un

angle $\alpha$ tel que tg $(\frac{\pi}{2} - \alpha) \leqslant \frac{H}{L} \times n$ dans laquelle H

est l'intervalle entre deux traits de la graduation, qui correspondraient au volume unitaire choisi, L est la largeur de l'indication chiffrée et n est le nombre de lignes directrices utilisées sur le récipient.

Les récipients utilisés ont très généralement une forme cylindrique ou tronconique avec un fond et une ouverture, ce qui implique que les génératrices de ces récipients sont des droites parfaitement définies, qui sont en général verticales ou peu inclinées par rapport à la verticale. Cependant, le terme génératrice ne doit pas être pris dans son sens étroit, puisque l'invention peut s'appliquer à des récipients de forme plus compliquée, auquel cas la génératrice considérée sera la droite qui résulterait de l'intersection de la surface extérieure du récipient avec un plan vertical passant par l'axe dudit récipient.

H est l'intervalle entre deux traits successifs qui correspondraient au volume unitaire chosi; n est le nombre de lignes directrices. La relation entre ces deux grandeurs vient du fait que chaque ligne directrice peut ne pas porter tous les traits nécessaires à l'évaluation d'un volume. Ainsi si l'on utilise deux lignes directrices (n = 2), chaque graduation pourra ne comporter qu'un sur deux des traits nécessaires au repérage total (par exemple une graduation ne représentera que les volumes mesurés en chiffres impairs 1, 3, 5, 7, etc. et l'autre graduation ne représentera que les volumes mesurés en chiffres pairs). On utilisera très souvent deux graduations opposées par rapport à l'axe du récipient.

L est la largeur occupée sur la surface du récipient par le chiffre ou le groupe de chiffres indiquant la valeur du volume mesuré. Cette largeur est mesurée suivant une droite horizontale, c'est-à-dire parallèle au fond du récipient.

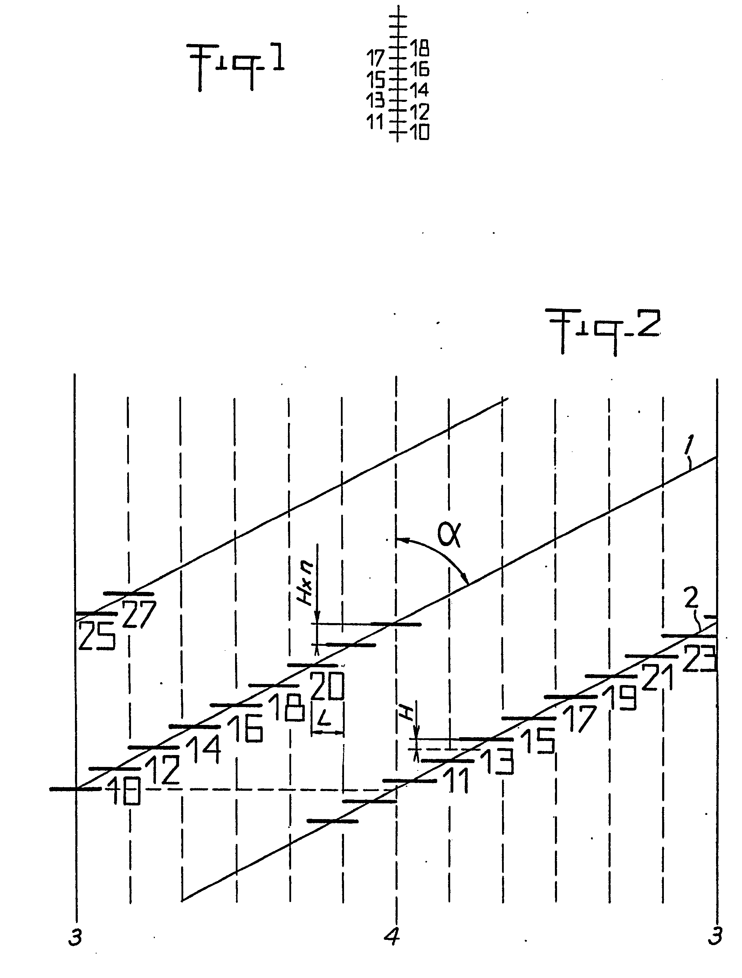

Un exemple non limitatif de l'invention est représenté sur les figures 1 et 2 sur lesquelles on a indiqué les graduations (et inscriptions) que l'on trouve sur un récipient de forme cylindrique.

Sur la figure 1 les graduations et inscriptions indiquant le volume sont disposées, classiquement, suivant une génératrice du récipient.

Sur la figure 2 les graduations et inscriptions indiquant le volume sont disposées selon deux lignes directrices. La figure 2 représente la surface latérale développée du récipient, les lignes en traits discontinus sont les génératrices (non matérialisées sur le récipient) dudit récipient. Le récipient est ainsi muni de deux lignes directrices 1 et 2 qui sont disposées à l'opposé par rapport à l'axe du récipient. Si on considère une graduation N portée sur une ligne directrice à l'intersection de cette ligne avec la génératrice 3, cette graduation est, dans un plan horizontal, à un niveau milieu entre N—1 et N + 1 sur l'autre directrice à l'intersection de cette ligne avec la génératrice 4. La directrice 1 porte, dans cet exemple, les graduations de chiffres impairs et la directrice 2 porte les graduations de chiffres pairs; la différence de niveau entre deux graduations successives est, sur chaque directrice, de H × 2.

## Revendication

Graduation d'un récipient de mesure d'un volume, caractérisée en ce qu'elle est disposée sur au moins une ligne directrice qui, par rapport à la génératrice dudit récipient de mesure fait un angle $\alpha$ tel que

tg $(\frac{\pi}{2} - \alpha) \leqslant \frac{H}{L} \times n$ dans laquelle H est l'intervalle entre deux traits successifs de la graduation qui correspondraient au volume unitaire choisi, L est la largeur de l'indication chiffrée sur cette graduation et n est le nombre de lignes directrices utilisées sur le récipient.

## Patentanspruch

Massskala für einen Volumenmessbehälter, dadurch gekennzeichnet, dass die Skala auf mindestens einer Leitlinie angeordnet ist, die gegenüber der Erzeugenden des Messbehälters einen Winkel $\alpha$ einnimmt, der

die Beziehung tg $(\frac{\pi}{2} - \alpha) \leqslant \frac{H}{L} \times n$ erfüllt, wobei H gleich dem Abstand zwischen zwei aufeinanderfolgenden Strichen der Einteilung ist und der Abstand dem gewählten Einheitsvolumen entspricht, L gleich der Breite der Masszahl auf dieser Skala und n gleich der Anzahl der auf dem Behälter verwendeten Leitlinien ist.

## Claim

Graduation of a volume-measuring container, characterized in that it is placed over at least one directing line which, with respect to the generatrix of said measuring container forms an angle α such that $\text{tg}\,(\frac{\pi}{2} - \alpha) \leqslant \frac{H}{L} \times n$ in which H is the interval between two successive marks of the graduation which would correspond to the selected unitary volume, L is the width of the indication numbered on said graduation, and n is the number of the directing lines used on the container.

0 106 720

Fig.1

Fig.2